# EUROPÄISCHE PATENTSCHRIFT

(11) **EP 1 532 908 B1**
(45) Veröffentlichungstag und Bekanntmachung des Hinweises auf die Patenterteilung: **18.07.2007**
(21) Anmeldenummer: 04026910.2
(22) Anmeldetag: 12.11.2004
(51) Int. Cl.: A47J 37/06

(54) **Salamander**
Salamander
Salamandre

(30) Priorität: 19.11.2003 DE 10354127
(43) Veröffentlichungstag der Anmeldung: 25.05.2005
(73) Patentinhaber: Salvis AG, 4663 Aarburg (CH)
(72) Erfinder:
(74) Vertreter: Brommer, Hans Joachim

(56) Entgegenhaltungen:
- WO-A-01/35805
- FR-A- 2 114 279
- FR-A- 2 687 767
- FR-A- 2 795 934
- US-A- 2 198 645

## Beschreibung

Die Erfindung betriff einen Salamander, bestehend aus einem Bodenteil, einer Tragsäule und einem Heizstrahler, der höhenverstellbar an der Tragsäule gelagert ist.

Derartige Salamander werden vor allem in Restaurant-Küchen eingesetzt. Sie dienen zum Warmhalten und Erhitzen von Speisen, ebenso aber auch zum Gratinieren, Überbacken, Bräunen und dergleichen.

Damit die Strahlungs-Einwirkung auf die auf dem Bodenteil des Salamanders abgestellten Nahrungsmittel rasch verändert werden kann, ist der Heizstrahler im allgemeinen höhenverstellbar am Salamander gelagert. Beispiele für derartige Salamander mit verstellbarem Heizstrahler sind in den DE-Gebrauchsmustern 296 10 240, 297 14 039 und der deutschen Offenlegungsschrift 35 22 209 beschrieben. Die Beheizung erfolgt im allgemeinen elektrisch; es ist aber auch eine Gas-Beheizung möglich.

Des Weiteren ist durch die FR-A 2 114 279 ein Heizstrahler für Raclette bekannt geworden, der oberhalb seines Zentrums höhenverstellbar gelagert ist, so dass er annähernd entlang einer Vertikalen durch den Schwerpunkt des Heizstrahlers verschoben werden kann. Ähnliches gilt auch für die FR-A 2 687 767, wo der Heizstrahler oberhalb seiner Lagerung einen Griff aufweist, um die Höhenverstellung zu bewirken.

Der vorliegenden Erfindung liegt nun die Aufgabe zugrunde, die bekannten Salamander dahingehend zu verbessern, dass sie sich durch höheren Bedienungskomfort auszeichnen. Insbesondere die Höhenverstellung des Heizstrahlers soll erleichtert werden.

Diese Aufgabe wird erfindungsgemäß dadurch gelöst, dass der Heizstrahler an seinem äußeren Umfang zumindest teilweise von Rahmenteilen umgeben ist, die durch etwa vertikal durchgehende Luftspalte vom Heizstrahler distanziert sind und dass an diesen Rahmenteilen Griffe zur Höhenverstellung des Heizstrahlers angeordnet sind.

Diese Gestaltung geht von folgender Erkenntnis aus: Die im Heizstrahler angeordneten Heizstäbe erreichen Temperaturen von etwa 700C° bis etwa 800C°. Daher findet ein starker Wärmefluss nach außen zum Griffbereich statt. Hinzu kommt, dass der Griff auch durch Wärmestrahlung, die von dem unteren Bodenteil reflektiert wird, aufgeheizt wird. Diese doppelte Aufheizung wird nun durch die erfindungsgemäßen Maßnahmen erheblich verringert, weil der zwischen Heizstrahler und Rahmen gebildete Luftspalt einen ständigen Durchfluss von Kühlluft aufgrund thermischer Konvektion erzeugt. Der Rahmen bleibt dadurch auch bei langer Betriebszeit auf einem Temperaturniveau von maximal 150C°. Dementsprechend ergibt sich auch eine deutliche Temperaturverringerung am Griff selbst.

Noch günstigere Temperaturverhältnisse ergeben sich dann, wenn der Griff zumindest teilweise als zweiter Rahmen ausgebildet wird und dieser zweite Rahmen ebenfalls durch einen etwa vertikal durchgehenden Luftspalt gegenüber dem ersten Rahmen distanziert wird. Auch dieser zweite Luftspalt wird durch Thermokonvektion permanent von der Umgebungsluft durchströmt und führt zu Temperaturwerten am Griff, die auch im Dauerbetrieb nur bei etwa 50C° liegen. Darüber hinaus bietet diese Griffausbildung den Vorteil der allseitigen Zugänglichkeit, wodurch die Höhenverstellung des Heizstrahlers nochmals erleichtert wird.

Zweckmäßig wird dafür gesorgt, dass die den Luftspalt zwischen Heizstrahler und erstem Rahmen und/oder zwischen erstem und zweitem Rahmen begrenzenden Wände weitestgehend glatt sind, damit sich eine wirksame KühlluftStrömung ausbilden kann.

Des Weiteren hat es sich als günstig erwiesen, dass die Unterkante des Griffes gegenüber der Unterkante des ersten Rahmens nach oben versetzt ist. Dadurch erzeugt der erste Rahmen mit seinem unteren Bereich einen Strahlungsschatten für die vom Bodenteil reflektierte Strahlung, der Griff wird also dieser Strahlung wesentlich weniger ausgesetzt und kann demzufolge auch nur weniger Wärme aufnehmen.

Die Befestigung des ersten Rahmens und des Griffes bzw. des zweiten Rahmens sollte verständlicher Weise so vorgenommen werden, dass der Wärmefluss vom Heizstrahler zum Rahmen und zum Griff minimiert wird. Hierzu können Befestigungsstifte mit kleinem Querschnitt und aus schlecht wärmeleitendem Material verwendet werden, insbesondere separate Befestigungsstifte für den ersten und den zweiten Rahmen. Aufgrund der hohen Kühlwirkung durch die beiden Luftspalte kann aber auch eine einfachere Montagemöglichkeit mittels vom Heizstrahler zum zweiten Rahmen durchgehender Befestigungsstifte angewendet werden, sodass beide Rahmen gemeinsam durch die gleichen Befestigungsstifte montiert werden.

In Weiterbildung der Erfindung empfiehlt es sich, dass die Lagerung des Heizstrahlers an der Tragsäule zumindest annähernd in einer Vertikalen durch den Schwerpunkt des Heizstrahlers angeordnet ist. Dadurch kann der Heizstrahler leichter nach oben oder unten verschoben werden, weil kein Kippmoment auf die Lagerung des Heizstrahlers einwirkt und die Reibkräfte in der Lagerung reduziert werden.

Meist haben die Heizstrahler einen symmetrischen Aufbau, was dazu führt, dass sein Schwerpunkt etwa im Zentrum des Heizstrahlers liegt, die Lagerung also im Zentrum angreifen kann, woraus auch ein optisch ansprechendes Aussehen des Salamanders resultiert.

Für die konstruktive Ausbildung der zentralen Aufhängung des Strahlers empfiehlt es sich, dass die Tragsäule, die zunächst wie bisher seitlich des Heizstrahlers nach oben ragt, einen etwa quer verlaufenden Arm aufweist, der sich in einen Bereich etwa oberhalb des Schwerpunktes des Heizstrahlers erstreckt und dort die Lagerung für den Heizstrahler aufweist. Die Tragsäule kann dadurch sehr schmal ausgeführt werden und gestattet praktisch einen vierseitigen Zugang mit Tellern, Platten etc. zum Salamander.

Eine andere wesentliche Weiterbildung der Erfindung besteht darin, dass das Bodenteil eine Auflageplatte mit mehrlagigem, insbesondere dreilagigem Aufbau aufweist und zumindest die Zwischenlage aus einem Material hoher Wärmeleitfähigkeit, insbesondere einer Aluminium- oder Kupfer-Legierung besteht. Dieser mehrschichtige Aufbau geht auf die Erkenntnis zurück, dass die bisherigen Auflageplatten durch die einseitig von oben einwirkende Beheizung eine Wölbung erfahren. Dies wird erfindungsgemäß dadurch vermieden, dass Oberseite und Unterseite der Auflageplatte gut wärmeleitend miteinander verbunden werden, sodass die Temperaturdifferenz zwischen beiden Seiten so gering ist, dass die Platte praktisch eben bleibt.

Die Außenlagen der Auflageplatte bestehen zweckmäßig jeweils aus einem Material mit zumindest annähernd gleichem Wärmeausdehnungskoeffizient, insbesondere aus einem Chrom-Nickel-Stahl, damit auch hohe Verschleißfestigkeit gewährleistet ist.

Damit die Auflageplatte, die ja zur Aufnahme der Nahrungsmittel dient, möglichst wenig Wärme nach unten abgibt, empfiehlt es sich, dass sie distanziert zum Bodenteil angeordnet wird. Zweckmäßig wird dies dadurch realisiert, dass am Bodenteil vier noch oben ragende Zapfen montiert sind, auf denen die Auflageplatte abgelegt werden kann. Sie ist also beidseitig plan, kann somit leicht gereinigt werden und kann sogar auch als Grillplatte benutzt werden.

Damit der Wärmefluss vom Bodenteil auf seine Standfläche -im allgemeinen eine Tisch- oder Buffetplatte- minimiert wird, empfiehlt es sich, dass das Bodenteil auch an seiner Unterseite Fußelemente zur Distanzierung aufweist.

Zu dem gleichen Zweck ist das Bodenteil etwas größer als die Auflageplatte, sodass es allseits etwas vorsteht, etwa derart, dass es der Außenkontur des zweiten Rahmens entspricht.

Eine andere Weiterbildung der Erfindung bezieht sich auf Salamander, bei denen die Höhenverstellung des Heizstrahlers über einen motorischen Hubantrieb erfolgt. Dieser Hubantrieb ist üblicherweise so gestaltet, dass durch Knopfdruck der Heizstrahler wahlweise nach oben oder unten verfahren wird. Die vorliegende Erfindung setzt nun daran an, dass der motorische Hubantrieb bei bestimmten Situationen zu langsam reagiert. Wenn beispielsweise ein Gericht gratiniert wird und der Gratiniervorgang früher beendet ist als erwartet, so beginnt das Gericht zu verbrennen und es wäre wünschenswert, die Position des Heizstrahlers schlagargartig zu korrigieren, nämlich von der Gratinierstellung in die Warmhaltestellung. Eine derartig schnelle Höhenverstellung ist aber mit den motorischen Hubantrieben nicht möglich. Deshalb wird erfindungsgemäß zwischen dem Hubantrieb und dem Heizstrahler eine Rutschkupplung angeordnet.

Dadurch ergibt sich der Vorteil, dass der Heizstrahler ganz nach Bedarf wahlweise motorisch oder manuell verstellt werden kann.

Die Rutschkupplung ist so zu bemessen, dass sie eine Reibkraft überträgt, die problemlos für die normale motorische Verstellung des Heizstrahlers ausreicht, bei geringfügig höheren Kräften jedoch durchrutscht, sodass jederzeit ein manuelles Korrigieren der Strahlerposition möglich ist.

Für die konstruktive Ausbildung der Rutschkupplung wie auch für ihre Positionierung im Antriebsstrang bieten sich dem Fachmann zahlreiche Möglichkeiten. Im Hinblick auf eine kostengünstige Gestaltung empfiehlt es sich, die Rutschkupplung durch einen Riementrieb zu bilden, also aus einer Riemenscheibe und einem Riemen, wobei der Riemen einerseits am Heizstrahler, andererseits an einem Spannelement, nämlich einem Gewicht, einer Feder oder dergleichen befestigt ist. Dadurch kann auf sehr einfache Weise die Kraftübertragung auf einen bestimmten Wert eingestellt werden und oberhalb dieses Wertes rutscht der Riemen durch, gestattet dann also die manuelle Verstellung.

Eine zweckmäßige Weiterbildung dieses Erfindungsgedankens beruht darauf, die Zuordnung zwischen dem Hubantrieb und der Position des Heizstrahlers, die sich bei einer manuellen Korrektur verändert, beim Einschalten des Hubantriebes automatisch wieder herzustellen, in dem zunächst ein Schalter angefahren wird, der als Referenz für die Hubposition dient. Der Hubantrieb wirkt also mit einem Schalter zusammen, der als Eichpunkt für die Hubposition fungiert.

Hierdurch ist es möglich, den Hubantrieb an eine automatische Programmsteuerung anzuschließen, etwa in der Art, dass beim Drücken einer Starttaste der Hubantrieb den Strahler automatisch auf eine vordefinierte Höhe fährt und die Heizung einschaltet. Nach Ablauf einer vorgegebenen Zeitspanne schaltet die Heizung beispielsweise zurück auf warm halten und der Hubantrieb fährt den Strahler in die Warmhaltestellung nach oben. Das Servicepersonal erkennt aus der Warmhalteposition des Reflektors, vorzugsweise auch aus akustischen Signalen, die automatisch vom Salamander abgegeben werden, dass das Gericht fertig ist und der Teller entnommen werden kann. Nach einer ebenfalls programmierten Warmhaltezeit schaltet die Steuerung gegebenenfalls die Heizung ab.

Damit die Zuordnung zwischen dem Hubantrieb und der Position des Strahlers schnell realisiert werden kann, empfiehlt es sich, dass die Eichposition mit einem Ende des Hubweges übereinstimmt, also etwa mit der oberen oder der unteren Hubposition korrespondiert. Der Strahler braucht dann nur in eine Richtung zu verfahren, um die Eichposition zu erreichen.

Weitere Merkmale und Vorteile der Erfindung ergeben sich aus den nachfolgenden Zeichnungen und aus den Zeichnungen selbst; dabei zeigt
- Figur 1: eine Schrägansicht des Salamanders;
- Figur 2: einen Vertikalschnitt durch den Salamander und
- Figur 3: eine Ansicht in Richtung des Pfeiles A in Figur 2.

Wie man sieht besteht der Salamander aus einem unteren Bodenteil 1 mit etwa rechteckiger Grundform. Außerhalb dieser Grundform läuft eine Tragsäule 2, die fest mit dem Bodenteil 1 verbunden ist, nach oben, wobei sie oben einen etwa quer verlaufenden Arm 2a aufweist, der sich in den Bereich oberhalb des Bodenteils 1 erstreckt. Etwa oberhalb des Zentrums des Bodenteiles 1 trägt der Arm 2a ein sich vertikal erstreckendes Lagergehäuse 3. Dieses Lagergehäuse ist nach unten offen und nimmt dort einen Führungsstab 4 auf, der fest mit einem Heizstrahler 5 verbunden ist.

Wesentlich ist nun, dass die vertikal verschiebbare Lagerung des Führungsstabes 4 im Lagergehäuse 3 zumindest annähernd oberhalb des Schwerpunktes des Heizstrahlers 5 positioniert ist. Die Lagerung des Heizstrahlers 5 ist dadurch ganz oder zumindest weitestgehend frei von Kippmomenten und ist dementsprechend reibungsarm, sodass es nur geringer Stellkräfte bedarf, um den Heizstrahler 5 vertikal zu verfahren.

Nach vorn herausragend schließt sich an das Lagergehäuse 3 eine Verlängerung des Armes 2a mit einer Bedienungseinheit an, die zugleich auch die elektronischen Schaltelemente für eine automatische Programmsteuerung des Salamanders enthält.

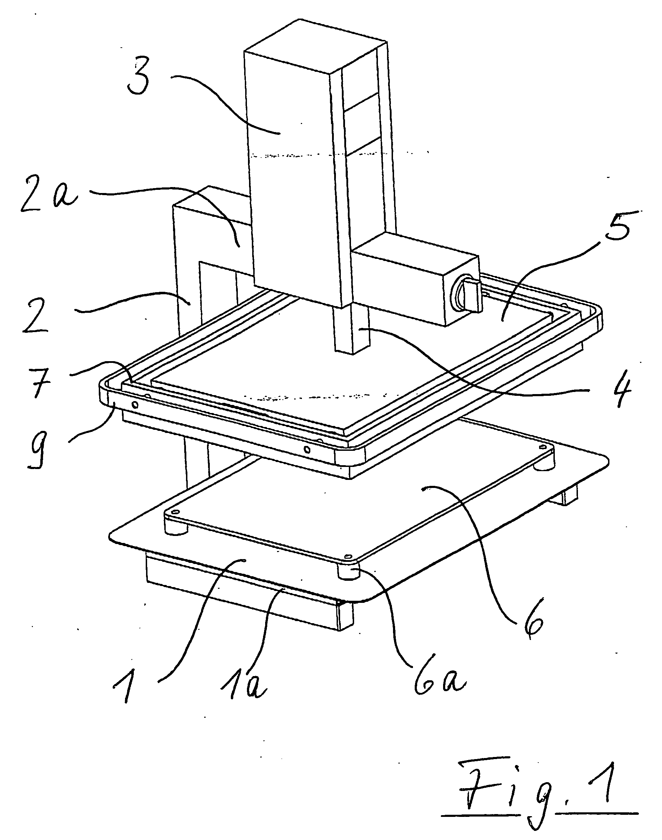

Wie Figur 1 außerdem zeigt, trägt das Bodenteil 1 an seiner Oberseite eine Auflageplatte 6. Diese Auflageplatte dient als Unterlagen für die zu erwärmenden Speisen. Sie liegt nicht direkt auf dem Bodenteil 1 auf, sondern ist über endständige Fußelemente 6a ihm gegenüber distanziert. Dadurch wird der Wärmeabfluss von der Auflageplatte 6 zur Bodenplatte 1 erheblich verringert.

Zu dem gleichen Zweck steht das Bodenteil 1 über Fußelemente 1a auf seiner Standfläche und steht gegenüber der Auflageplatte 6 allseits horizontal vor.

Wie man aus Figur 1 erkennen kann, hat die galgenähnliche schmale Ausbildung der Tragsäule 2 den Vorteil, dass der Salamander allseits gut zugänglich ist.

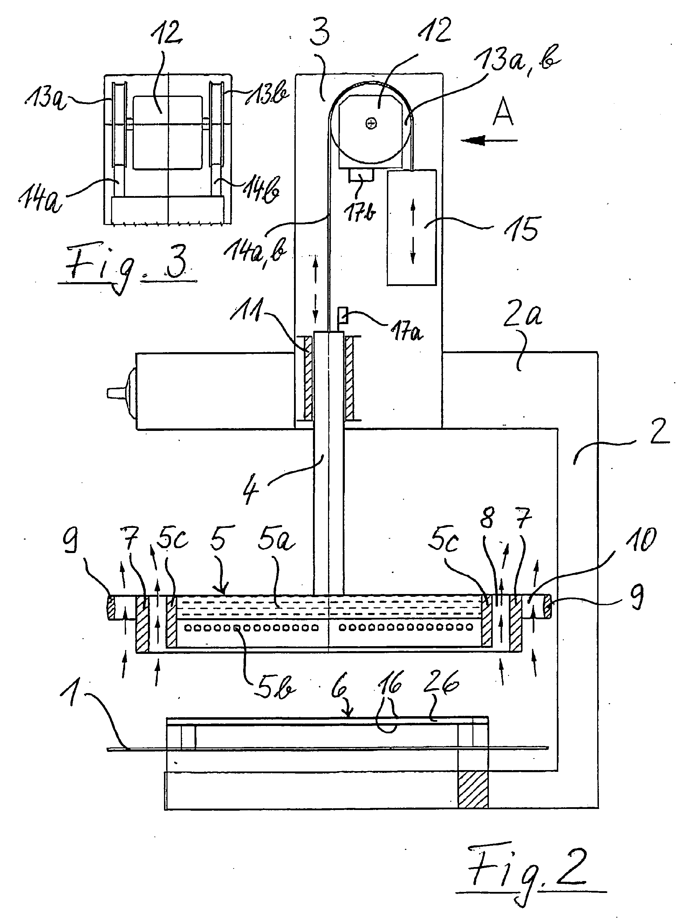

Wie vor allem aus Figur 2 deutlich wird, ist der plattenartige Heizstrahler 5, der innerhalb seines Außenmantels 5c oben eine Isolierung 5a und unten eine Vielzahl elektrischer Heizstäbe 5b trägt, an seiner Außenseite von einem ersten Rahmen 7 umgeben. Dieser Rahmen 7 läuft auf gleicher Höhe wie die Heizplatte 5 um diese herum, jedoch horizontal zu ihm beabstandet, sodass sich ein allseits umlaufender Zwischenraum in Form eines vertikalen Luftspaltes 8 bildet. Dieser Luftspalt 8 ist oben und unten offen und wird nur an wenigen Stellen lokal unterbrochen, dort nämlich, wo der Rahmen 7 am Heizstrahler 5 befestigt ist.

Weiter außen ist der Rahmen 7 von einem zweiten Rahmen 9 umgeben, und zwar ebenfalls horizontal beabstandet, sodass sich wieder allseits ein umlaufender vertikaler Luftspalt 10 bildet. Auch dieser Luftspalt 10 ist nur dort unterbrochen, wo der zweite Rahmen 9 mit dem ersten Rahmen 7 verbunden ist. Es ist aber selbstverständlich nicht zwingend, dass beide Rahmen ohne Unterbrechung um den ganzen Umfang des Heizstrahlers 5 herumlaufen.

Aufgrund der hohen Temperatur des Heizstrahlers 5 bilden sich in den beiden Spalten 8 und 10 automatisch aufgrund der Thermokonvektion von unten nach oben gehende Luftströmungen -durch die Pfeile angedeutet- und diese Luftströmungen bewirken eine starke Kühlung bereits an der Außenwand 5c des Heizstrahlers und erst recht am ersten Rahmen 7 und am zweiten Rahmen 9.

Der zweite Rahmen 9 fungiert als Griff für die Höhenverstellung des Heizstrahlers 5. Er ist, wie Figur 2 zeigt, mit seiner Unterkante gegenüber der Unterkante des ersten Rahmens 7 nach oben versetzt. Dadurch bildet der untere Teil des Rahmens 7 eine Abschirmung gegenüber der von der Auflageplatte 6 reflektierten Wärmestrahlung, d.h. der Griff liegt weitestgehend im Strahlungsschatten des ersten Rahmens 7, zumal er auf einem weiter außen liegenden Umfang verläuft als der Außenrand der Auflageplatte 6, nämlich etwa fluchtend zum Außenrand des Bodenteiles 1.

Die Auflageplatte 6 hat einen dreilagigen Aufbau, nämlich zwei Außenlagen16 aus dem gleichen Material, vorzugsweise Edelstahl und einer Zwischenlage, die sich durch hohe Wärmeleitfähigkeit auszeichnet. Zweckmäßig hat diese Zwischenlage eine wesentlich größere Wandstärke als die beiden Außenlagen. Dadurch werden die beiden Außenlagen auf ähnlichem Temperaturniveau gehalten und die Auflageplatte 6 bleibt auch bei hoher Temperatur eben.

Für das Bodenteil 1 genügt demgegenüber eine einlagige Ausführung, vorzugsweise aus Edelstahl. Es liegt entweder direkt auf den unteren Querstreben der Tragsäule 2 auf oder wie im Ausführungsbeispiel über zwischengeschaltete Fußelemente 1a.

Die Figuren 2 und 3 zeigen außerdem den motorischen Hubantrieb für die Höhenverstellung des Heizstrahlers 5. Er besteht aus einem in dem Aufbau 3 angeordneten Elektromotor 12, der an zumindest einer Stirnseite eine Riemenscheibe 13a bzw. 13b mit horizontaler Drehachse antreibt. Über diese beiden Riemenscheiben läuft jeweils ein Riemen 14a bzw. 14b und diese Riemen sind an ihrem einen Ende mit dem Führungsstab 4 des Heizstrahlers 5, an ihrem anderen Ende mit einem gemeinsamen Gegengewicht 15 verbunden. Dieses Gegengewicht ist ähnlich bemessen wie das Gewicht des kompletten Heizstrahlers 5 einschließlich seiner Stromversorgung und seinem Führungsstab 4. Es muss sicherstellen, dass der Riementrieb den Heizstrahler je nach Drehrichtung des Antriebsmotors 12 nach oben oder unten verfährt.

Zugleich fungiert der Riementrieb aber auch als Rutschkupplung, denn es ist jederzeit möglich, den Heizstrahler manuell zu verfahren, wobei dann die Riemen über die stillstehenden Riemenscheiben rutschen.

Da bei der manuellen Verstellung des Heizstrahlers seine Zuordnung zum Hubantrieb verändert wird, die Programmsteuerung aber bestimmte Höhenpositionen des Heizstrahlers anfahren soll, wird vor jedem automatischen Verfahren des Heizstrahlers zunächst wieder die richtige Zuordnung hergestellt, in dem quasi eine Eichposition angefahren wird. Dazu ist im Ausführungsbeispiel an dem Führungsstab 4 ein Permanentmagnet 17a montiert, der mit einem ortsfest montierten Näherungsschalter 17b korrespondiert. Die Position der Schaltelemente 17a und 17b ist so gewählt, dass die Eichung jeweils in der oberen Position des Heizstrahlers erfolgt, das heißt, dass bei Beginn einer automatischen Verstellung der Motor 12 den Heizstrahler zunächst in die obere Endposition verfährt, bis die Schaltelemente 17a und 17b ansprechen.

Selbstverständlich sind auch völlig andere konstruktive Ausgestaltungen für die Synchronisierung zwischen Antrieb und Heizstrahler-Position möglich, ebenso andere Positionierungen der Schaltelemente. Beispielsweise können die Schaltelemente auch an dem Riemen 14a oder 14b einerseits und der entsprechenden Riemenscheibe 13a bzw. 13b andererseits angeordnet sein, wobei die Riemenscheibe dann an dem in der Anschlagstellung befindlichen Riemen durchrutscht, bis die Eichposition erreicht ist.

Außerdem verdeutlicht Figur 2 die Hublagerung des Heizstrahlers in Form einer Buchse 11, die an dem Arm 2a der Tragsäule montiert ist, und zwar oberhalb des Schwerpunktes des Heizstrahlers 5. Diese Buchse 11 umgibt den Führungsstab 4 unter Zwischenschaltung einer zeichnerisch nicht dargestellten Kugellagerung und erlaubt dessen reibungsarme Höhenverstellung.

## Patentansprüche

1. Salamander, bestehend aus einem Bodenteil (1), einer Tragsäule (2) und einem Heizstrahler (5), der höhenverstellbar an der Tragsäule (2) gelagert ist,
**dadurch gekennzeichnet,**
**dass** der Heizstrahler (5) an seinem äußeren Umfang zumindest teilweise von Rahmenteilen (7) umgeben ist, die durch etwa vertikal durchgehende Luftspalte (8) vom Heizstrahler (5) distanziert sind und dass an diesen Rahmenteilen (7) Griffe (9) zur Höhenverstellung des Heizstrahlers (5) angeordnet sind.

2. Salamander nach Anspruch 1,
**dadurch gekennzeichnet,**
**dass** die Griffe (9) durch zweite Rahmenteile gebildet sind, die durch einen etwa vertikal durchgehenden Luftspalt (10) gegenüber den ersten Rahmenteilen (7) distanziert sind.

3. Salamander nach Anspruch 2,
**dadurch gekennzeichnet,**
**dass** sich die ersten Rahmenteile (7) und/oder die zweiten Rahmenteile (9) jeweils in einem umlaufenden Rahmen verelnigen, der sich vorzugsweise über den gesamten Umfang des Heizstrahlers (5) erstreckt.

4. Salamander nach Anspruch 1 oder 2,
**dadurch gekennzeichnet,**
**dass** die Unterkante der zweiten Rahmenteile (9) gegenüber der Unterkante der ersten Rahmenteile (7) nach oben versetzt sind.

5. Salamander nach Anspruch 1,
**dadurch gekennzeichnet,**
**dass** die Lagerung (11) des Heizstrahlers (5) an der Tragsäule (2) zumindest annähernd in einer Vertikalen durch den Schwerpunkt des Heizstrahlers (5) angeordnet ist.

6. Salamander nach Anspruch 5,
**dadurch gekennzeichnet,**
**dass** die Lagerung (11) des Heizstrahler (5) an der Tragsäule (2) etwa oberhalb des Zentrums des Heizstrahlers (5) angeordnet ist.

7. Salamander nach Anspruch 5,
**dadurch gekennzeichnet,**
**dass** die Tragsäule (2) oberhalb des Heizstrahlers (5) einen etwa quer verlaufenden Arm (2a) aufweist, der sich in einen Bereich etwa oberhalb des Schwerpunktes des Heizstrahlers (5) erstreckt und dort die Lagerung (11) für den Heizstrahler (5) aufweist.

8. Salamander, nach Anspruch 1,
**dadurch gekennzeichnet,**
**dass** das Bodenteil (1) eine Auflageplatte (6) mit mehrlagigem Aufbau trägt und zumindest die Zwischenlage (26) aus einem Material hoher Wärmeleitfähigkeit, insbesondere einer Aluminium- oder Kupferlegierung, besteht.

9. Salamander nach Anspruch 8,
**dadurch gekennzeichnet,**
**dass** das Bodenteil (1) gegenüber der Auflageplatte (6) seitlich vorsteht, insbesondere etwa der Außenkontur der zweiten Rahmenteile (9) entspricht.

10. Salamander nach Anspruch 1, wobei die Höhenverstellung des Heizstrahlers (5) über einen motorischen Hubantrieb (12) erfolgt,
**dadurch gekennzeichnet,**
**dass** eine Rutschkupplung (13a, b/14a, b) zwischen dem Hubantrieb (12) und dem Heizstrahler (5) angeordnet ist.

11. Salamander nach Anspruch 10,
**dadurch gekennzeichnet,**
**dass** die Rutschkupplung (13a, b/14a, b) durch einen Riementrieb gebildet ist.

12. Salamander nach Anspruch 10,
**dadurch gekennzeichnet,**
**dass** die Rutschkupplung aus einer Riemenscheibe (13a, b) und einem Riemen (14a, b) besteht, wobei der Riemen (14a, b) einerseits am Heizstrahler (5), andererseits an einem Spannelement (15) befestigt ist.

13. Salamander nach Anspruch 10,
**dadurch gekennzeichnet,**
**dass** der Hubantrieb (12) an eine automatische Programmsteuerung angeschlossen ist, welche die Heizdauer und/oder die Heizintensität und/oder die Hubposition des Heizstrahlers steuert und insbesondere die Programmierung aufeinander folgender unterschiedlicher Betriebsweisen erlaubt.

14. Salamanders nach Anspruch 10,
**dadurch gekennzeichnet,**
**dass** bei automatischer Programmsteuerung des Salamanders der Hubantrieb (12) zunächst eine Eichposition des Heizstrahlers (5) anfährt.

15. Salamander nach Anspruch 14,
**dadurch gekennzeichnet,**
**dass** die Eichposition mit einem Ende des Hubweges des Heizstrahlers (5) übereinstimmt.

## Claims

1. Salamander-type heating device, comprising a base part (1), a supporting column (2) and a radiant heating element (5) which is mounted so as to be adjustable in height on the supporting column (2), **characterised in that** the radiant heating element (5) is at least partially surrounded on its outer periphery by frame parts (7) which are spaced from the radiant heating element (5) by air gaps (8) which run through approximately vertically, and that handles (9) for adjusting the height of the radiant heating element (5) are disposed on these frame parts (7).

2. Salamander-type heating device as claimed in Claim 1, **characterised in that** the handles (9) are formed by second frame parts which are spaced with respect to the first frame parts (7) by an air gap (10) which runs through approximately vertically.

3. Salamander-type heating device as claimed in Claim 2, **characterised in that** the first frame parts (7) and/or the second frame parts (9) are in each case combined in a peripheral frame which preferably extends over the entire periphery of the radiant heating element (5).

4. Salamander-type heating device as claimed in Claim 1 or 2, **characterised in that** the lower edges of the second frame parts (9) are offset upwards with respect to the lower edges of the first frame parts (7).

5. Salamander-type heating device as claimed in Claim 1, **characterised in that** the mounting (11) of the radiant heating element (5) on the supporting column (2) is disposed at least approximately in a vertical line through the centre of gravity of the radiant heating element (5).

6. Salamander-type heating device as claimed in Claim 5, **characterised in that** the mounting (11) of the radiant heating element (5) on the supporting column (2) is disposed approximately above the centre of the radiant heating element (5).

7. Salamander-type heating device as claimed in Claim 5, **characterised in that** the supporting column (2) has above the radiant heating element (5) an arm (2a) which extends approximately transversely in a region approximately above the centre of gravity of the radiant heating element (5) and has the mounting (11) for the radiant heating element (5) located there.

8. Salamander-type heating device as claimed in Claim 1, **characterised in that** the base part (1) bears a supporting plate (6) of multilayer construction and at least the intermediate layer (26) is made from a material with high thermal conductivity, in particular an aluminium or copper alloy.

9. Salamander-type heating device as claimed in Claim 8, **characterised in that** the base part (1) projects laterally with respect to the supporting plate (6) and in particular corresponds approximately to the outer contour of the second frame parts (9).

10. Salamander-type heating device as claimed in Claim 1, in which the height adjustment of the radiant heating element (5) is carried out by a motorised lifting drive (12), **characterised in that** a slip clutch (13a, b/14a, b) is disposed between the lifting drive (12) and the radiant heating element (5).

11. Salamander-type heating device as claimed in Claim 10, **characterised in that** the slip clutch (13a,b/14a, b) is formed by a belt drive.

12. Salamander-type heating device as claimed in Claim 10, **characterised in that** the slip clutch comprises a belt pulley (13a, b) and a belt (14a, b), wherein the belt (14a, b) on the one hand is fixed on the radiant heating element (5) and on the other hand is fixed on a clamping element (15).

13. Salamander-type heating device as claimed in Claim 10, **characterised in that** the lifting drive (12) is connected to an automatic program control which controls the duration and/or the intensity of the heating and/or the lifted position of the radiant heating element and in particular allows the programming of different successive modes of operation.

14. Salamander-type heating device as claimed in Claim 10, **characterised in that** when the salamander-type heating device is under automatic program control the lifting drive (12) first of all approaches a calibration position of the radiant heating element (5).

15. Salamander-type heating device as claimed in Claim 14, **characterised in that** the calibration position corresponds to one end of the lifting path of the radiant heating element (5).

## Revendications

1. Salamandre composée d'une partie de base (1), d'une colonne porteuse (2) et d'un radiateur de chauffage (5) qui est monté de manière réglable en hauteur sur la colonne porteuse (2),
**caractérisée en ce**
**que** le radiateur de chauffage (5) est entouré sur son pourtour extérieur, au moins partiellement, de pièces de cadre (7) qui sont tenues à distance du radiateur de chauffage (5) par des fentes d'aération (8) traversantes approximativement verticalement et que des poignées (9) permettant le réglage en hauteur du radiateur de chauffage (5) sont disposées sur ces pièces de cadre (7).

2. Salamandre selon la revendication 1,
**caractérisée en ce**
**que** les poignées (9) sont formées par des deuxièmes pièces de cadre qui sont tenues à distance des premières pièces de cadre (7) par une fente d'aération (10) traversante approximativement verticalement.

3. Salamandre selon la revendication 2,
**caractérisée en ce**
**que** les premières pièces de cadre (7) et/ou les deuxièmes pièces de cadre (9) se réunissent chaque fois en un cadre périphérique qui s'étend de préférence sur tout le pourtour du radiateur de chauffage (5).

4. Salamandre selon la revendication 1 ou 2,
**caractérisée en ce**
**que** le bord inférieur des deuxièmes pièces de cadre (9) est décalé vers le haut par rapport au bord inférieur des premières pièces de cadre (7).

5. Salamandre selon la revendication 1,
**caractérisée en ce**
**que** le logement (11) du radiateur de chauffage (5) sur la colonne porteuse (2) est disposé au moins approximativement sur une verticale passant par le centre de gravité du radiateur de chauffage (5).

6. Salamandre selon la revendication 5,
**caractérisée en ce**
**que** le logement (11) du radiateur de chauffage (5) sur la colonne porteuse (2) est disposé approximativement au-dessus du centre du radiateur de chauffage (5).

7. Salamandre selon la revendication 5,
**caractérisée en ce**
**que** la colonne porteuse (2) présente au-dessus du radiateur de chauffage (5) un bras (2a) approximativement transversal qui s'étend dans une zone située approximativement au-dessus du centre de gravité du radiateur de chauffage (5) et présente à cet endroit le logement (11) pour le radiateur de chauffage (5).

8. Salamandre selon la revendication 1,
**caractérisée en ce**
**que** la partie de base (1) porte une plaque d'appui (6) à structure multicouche et au moins la couche intermédiaire (26) est constituée d'un métal à haute conductibilité thermique, en particulier d'un alliage d'aluminium ou de cuivre.

9. Salamandre selon la revendication 8,
**caractérisée en ce**
**que** la partie de base (1) dépasse latéralement par rapport à la plaque d'appui (6), en particulier correspond approximativement au contour extérieur des deuxièmes pièces de cadre (9).

10. Salamandre selon la revendication 1, dans laquelle le réglage en hauteur du radiateur de chauffage (5) est réalisé par un entraînement de levage à moteur (12),
**caractérisée en ce**
**qu'**un embrayage à friction (13a, b/14a, b) est disposé entre l'entraînement de levage (12) et le radiateur de chauffage (5).

11. Salamandre selon la revendication 10,
**caractérisée en ce**
**que** l'embrayage à friction (13a, b/14a, b) est formé par une transmission par courroie.

12. Salamandre selon la revendication 10,
**caractérisée en ce**
**que** l'embrayage à friction est constitué d'une poulie (13a, b) et d'une courroie (14a, b), la courroie (14a, b) étant fixée d'une part au radiateur de chauffage (5), d'autre part à un élément de tension (15).

13. Salamandre selon la revendication 10,
**caractérisée en ce**
**que** l'entraînement de levage (12) est raccordé à une commande par programme automatique qui commande la durée de chauffage et/ou l'intensité de chauffage et/ou la position de levage du radiateur de chauffage et permet, en particulier, la programmation de différents modes de fonctionnement successifs.

14. Salamandre selon la revendication 10,
**caractérisée en ce**
**que**, en cas de commande par programme automatique de la salamandre, l'entraînement de levage (12) rejoint d'abord une position d'étalonnage du radiateur de chauffage (5).

15. Salamandre selon la revendication 14,
**caractérisée en ce**
**que** la position d'étalonnage correspond à une fin de la course de levage du radiateur de chauffage (5).
